# EUROPEAN PATENT APPLICATION

(11) **EP 2 495 962 A1**
(43) Date of publication of application: **05.09.2012**
(21) Application number: 10826721.2
(22) Date of filing: 26.10.2010
(51) Int. Cl.: H04N 5/445, G09G 5/00, G09G 5/10, H04N 7/173

(54) **DISPLAY DEVICE, CONTROL METHOD FOR SAID DISPLAY DEVICE, PROGRAM, AND COMPUTER-READABLE RECORDING MEDIUM HAVING PROGRAM STORED THEREON**

(30) Priority: 27.10.2009 JP 2009246899
(71) Applicant: Sharp Kabushiki Kaisha, Osaka-shi, Osaka 545-8522 (JP)
(72) Inventor: KOIKE, Akira, Osaka-shi, Osaka 545-8522 (JP); TAKAKU, Kohichi, Osaka-shi, Osaka 545-8522 (JP); SHIMIZU, Takamasa, Osaka-shi, Osaka 545-8522 (JP); TAKIGUCHI, Masahiko, Osaka-shi, Osaka 545-8522 (JP); OHYA, Akiyoshi, Osaka-shi, Osaka 545-8522 (JP); OGAWA, Atsushi, Osaka-shi, Osaka 545-8522 (JP); HIRATA, Koichi, Osaka-shi, Osaka 545-8522 (JP); FUJII, Osamu, Osaka-shi, Osaka 545-8522 (JP)
(74) Representative: Müller - Hoffmann & Partner
(86) International application number: PCT/JP2010/068967
(87) International publication number: WO 2011/052589

(57) **Abstract**

A television receiver (10) of the present invention includes a genre identification section (43) that identifies a genre of contents, a video processing section (19) that displays the contents upon correcting the contents with an image quality parameter set in accordance with the identified genre in advance, a display control section (21) that displays, while the contents is displayed, an adjustment item for adjusting a value of the image quality parameter, a parameter value adjustment section (41) that adjusts the value of the image quality parameter based on entry by a user, and a parameter value changing section (42) that changes the value of the image quality parameter, when the identified genre changes to another genre, to a value set in advance corresponding to a genre after the genre changes, and the parameter value changing section (42) changes the value of the image quality parameter in a different period of time depending on whether or not the adjustment item is displayed.

## Description

### Technical Field

The present invention relates to a display device, a control method of the display device, a program, and a computer-readable recording medium having the program stored thereon. More specifically, the present invention relates to a display device, a control method of the display device, a program, and a computer-readable recording medium having the program stored thereon, each of which changes image quality parameters in accordance with a genre of contents.

### Background Art

There is an genre image quality adjustment method in which, when adjustment corresponding to a genre is carried out, contents of a specific genre is displayed to minutely change its image quality for that genre so as to display an image optimum for the user. For instance, Patent Literature 1 discloses a method of adjusting image quality, in which frequencies of change in image quality parameters for each genre are stored in advance each associated with user satisfaction related to that image quality parameter, and the video is adjusted to its optimum state for the user based on this user satisfaction.

Moreover, with a specification in which the image quality is changed depending on the genre, when the genre is changed as a result of a switchover of programs or the like, there are cases where a sense of discomfort is felt in viewing the image, if image quality in that switchover part immediately changes. Hence, in order to avoid such discomfort, there also are methods in which the image quality parameters change gradually when the genre changes. This operation is carried out, for example, when a currently broadcasted sports program ends and a movie starts thereafter, when a program is changed from a sports program to a movie as a result of the user changing channels, or when detection of a genre changes from detecting a movie to detecting a program of another genre at a time when a commercial is run during broadcasting of the movie.

### Citation List

### Patent Literature

Patent Literature 1
   Japanese Patent Application Publication, Tokukai, No. 2004-228788 A (Publication Date: August 12, 2004)

### Summary of Invention

### Technical Problem

However, the technique as described above, which gradually changes the image quality parameter, is not sufficient enough in the following points when the user is viewing the program.

For example, in a case in which the user wishes to adjust values of image quality parameters for a movie starting later while the user is viewing a sports program, so that the image quality parameters for the movie are set to meet the preference of the user, it is preferable that the image quality parameter values are adjustable immediately, after the sports program ends and the movie starts. However, with a specification as in the conventional art in which the values of the image quality parameters are made to gradually change from the moment the genre of the displayed contents changes to another genre, it is not possible for the user to accurately adjust the image quality parameter value.

Namely, when the sports program ends and the movie starts thereafter, the display device performs correction by gradually changing the values of the image quality parameters, to correct the image quality with respect to the movie. In a case at this time in which the user directly adjusts the values of the image quality parameters, the user would adjust the values of the image quality parameters by viewing the displayed image and carrying out adjustment so that an image quality of their preference is achieved in the displayed image. However, immediately after the change in the genre, the image quality of the image that serves as a standard for the adjustment has not yet changed completely to the values of the image quality parameters set in advance for that changed genre. If the user adjusts the image quality parameters in such a state, the image quality may result in a different image quality from what the user intended to achieve, at the point in time when the value of the image quality parameter has completely changed to the values set in advance. Hence, in order to enable the user to accurately adjust the values of the image quality parameters, the user is to wait until the change in the image quality parameters have completed in the device.

Moreover, although Patent Literature 1 discloses nothing of allowing a variable timing for changing the values of the image quality parameters with respect to the genre of the contents, the problem in image quality adjustment may also occur in a case in which the user directly changes the genre of the displayed contents to a different genre.

The present invention is accomplished in view of the foregoing problems, and it is an object thereof to provide a display device capable of smoothly adjusting the image quality to that meeting a preference of a user.

### Solution to Problem

In order to attain the object, a display device according to the present invention is a device that receives and displays contents, the device including: genre identification means for identifying to which of a plurality of different genres a genre of the contents belong; contents display means for displaying the contents upon correcting the contents with an image quality parameter set corresponding to the identified genre in advance, the image quality parameter being indicative of an image quality in accordance with the genre; adjustment item display means for displaying, while the contents is displayed, an adjustment item for adjusting a value of the image quality parameter indicative of the image quality corresponding to a genre of any one of the plurality of genres; parameter value adjusting means for adjusting the value of the image quality parameter corresponding to the adjustment item, based on entry by a user with respect to the displayed adjustment item; and parameter value changing means for changing the value of the image quality parameter used by the contents display means in correcting the contents, when the genre identified by the identifying means changes from a genre of any one of the plurality of genres to another genre different from that genre, the value of the image quality parameter being changed from a value set corresponding to the genre before the genre changes to a value set in advance corresponding to the genre after the genre changes, the parameter value changing means changing the value of the image quality parameter in a different period of time depending on whether or not the adjustment item is displayed.

In order the attain the object, a control method according to the present invention is a method of controlling a device that receives and displays contents, the method including the steps of: identifying to which of a plurality of different genres a genre of the contents belong; displaying the contents upon correcting the contents with an image quality parameter set in advance corresponding to the genre identified in the step of identifying, the image quality parameter being indicative of an image quality in accordance with the genre; displaying an adjustment item, while the contents is displayed in the step of displaying the contents, the adjustment item being displayed for adjusting a value of the image quality parameter indicative of the image quality corresponding to a genre of any one of the plurality of genres; adjusting a value of the image quality parameter corresponding to the adjustment item, based on entry by a user with respect to the adjustment item displayed in the step of displaying the adjustment item; and changing the value of the image quality parameter used by the contents display means in correcting the contents in the step of displaying, when the genre identified in the step of identifying changes from a genre of any one of the plurality of genres to another genre different from that genre, the value of the image quality parameter being changed from a value set corresponding to the genre before the genre changes to a value set in advance corresponding to the genre after the genre changes, the step of changing the image quality parameter value changing the value of the image quality parameter in a different period of time depending on whether or not the adjustment item is displayed.

According to the configuration, in the present invention, received contents is displayed upon correcting the contents based on a value set in advance of an image quality parameter. More specifically, first, the received contents is identified as to which of a plurality of different genres a genre of the received contents belong. The plurality of different genres are set in advance with corresponding image quality parameter values. Hence, when the genre of displayed contents changes, the value of the image quality parameter changes from the value set corresponding to the genre of the contents before the genre changes to a value set corresponding to the genre of the contents after the genre has changed. Every time the genre of the displayed contents changes, the display device displays the contents upon performing correction based on the changed image quality parameter.

Moreover, it is possible to display, while displaying the contents, an adjustment item for adjusting the value of the image quality parameter that is indicative of the image quality of the genre of any one of the plurality of genres. Based on entry by the user with respect to this displayed adjustment item, the display device is capable of adjusting the value of the image quality parameter corresponding to the adjustment item.

Namely, in a case in which the user wishes to adjust an image quality parameter corresponding to a genre of any one of the plurality of genres, displaying the adjustment item allows for adjusting the image quality parameter so that the contents is corrected to an image quality that meets the preference of the user.

Moreover, when the genre of the received contents changes to another genre different from the former genre, the value of the image quality parameter can be changed at a different period of time depending on whether or not the adjustment item is displayed.

For example, when a user is viewing a broadcasted program ordinarily and no adjustment item is displayed, adjustment of any image quality parameter by the user is not accepted. Hence, when the genre of the displayed contents is changed to another different genre, the value of the image quality parameter is changed gradually to that set in advance corresponding to the another genre. As a result, even if the value of the image quality parameter changes to that corresponding to the changed genre every time the type of genre changes, the image quality of the contents displayed after the image quality is corrected based on the changed value does not change abruptly. This allows for preventing the sense of discomfort in view by the user.

On the other hand, in a case in which for example the user makes the adjustment items be displayed for adjusting the image quality parameter of a specific genre to any value, when the genre of the displayed contents changes to another genre, the value of the image quality parameter immediately changes to that set in advance corresponding to the another genre. This allows for the user to adjust the image quality parameter to an image quality meeting the preference of the user immediately, when the genre of the displayed contents changes to a specific genre selected by the user. As such, according to the display device of the present invention, it is possible to smoothly adjust the image quality to one adapting with the preference of the user.

### Advantageous Effects of Invention

The present invention is a device that receives and displays contents, the device including: genre identification means for identifying to which of a plurality of different genres a genre of the contents belong; contents display means for displaying the contents upon correcting the contents with an image quality parameter set corresponding to the identified genre in advance, the image quality parameter being indicative of an image quality in accordance with the genre; adjustment item display means for displaying, while the contents is displayed, an adjustment item for adjusting a value of the image quality parameter indicative of the image quality corresponding to a genre of any one of the plurality of genres; parameter value adjusting means for adjusting the value of the image quality parameter corresponding to the adjustment item, based on entry by a user with respect to the displayed adjustment item; and parameter value changing means for changing the value of the image quality parameter used by the contents display means in correcting the contents, when the genre identified by the identifying means changes from a genre of any one of the plurality of genres to another genre different from that genre, the value of the image quality parameter being changed from a value set corresponding to the genre before the genre changes to a value set in advance corresponding to the genre after the genre changes, the parameter value changing means changing the value of the image quality parameter in a different period of time depending on whether or not the adjustment item is displayed. This allows for smoothly adjusting the image quality to one adapting with the preference of the user.

### Brief Description of Drawings

Fig. 1

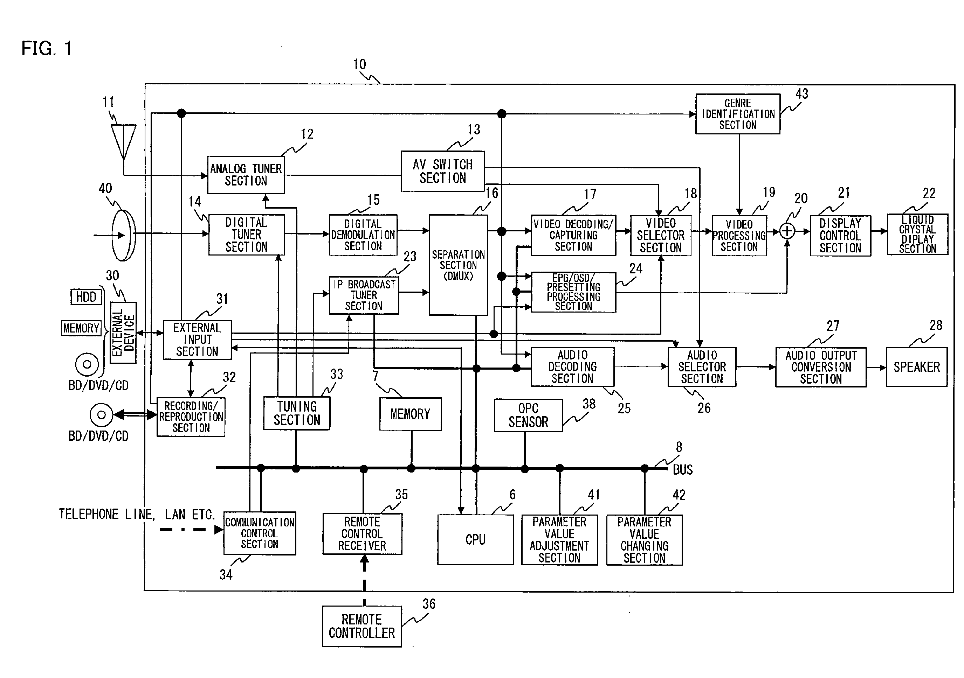

   Fig. 1 is a block diagram schematically illustrating a configuration of an embodiment of a display device according to the present invention.
Fig. 2

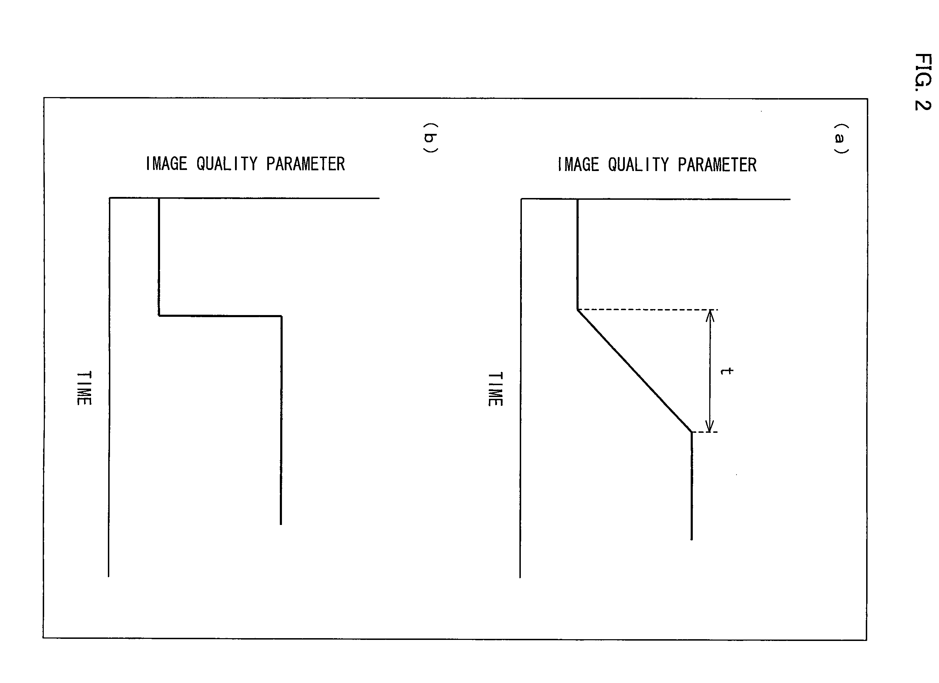

   Fig. 2 is a graph showing a change in a value of an image quality parameter, in an embodiment of a display device according to the present invention.
Fig. 3

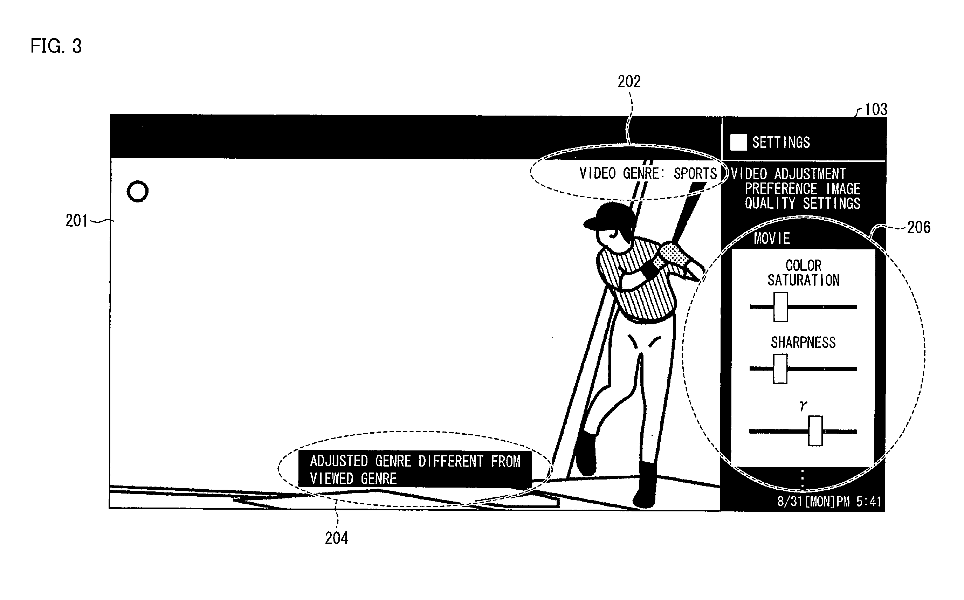

   Fig. 3 is a view illustrating an example of a screen in an embodiment of a display device according to the present invention.
Fig. 4

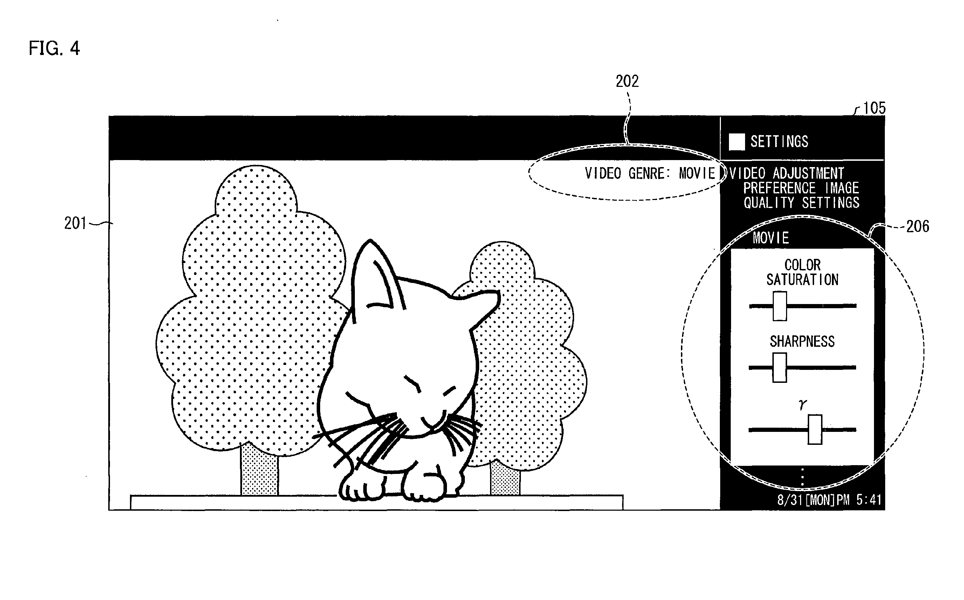

   Fig. 4 is a view illustrating an example of a screen in an embodiment of a display device according to the present invention.
Fig. 5

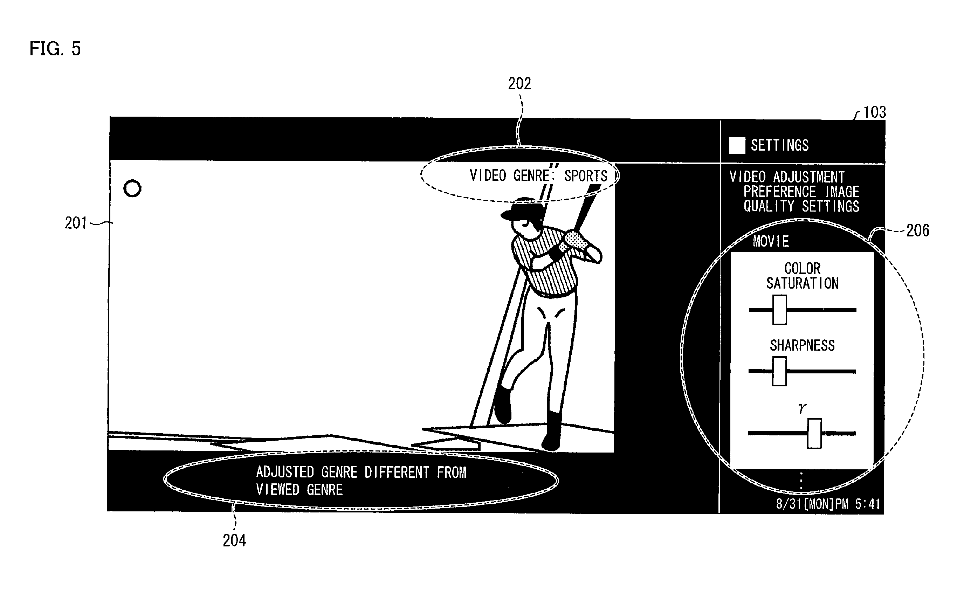

   Fig. 5 is a view illustrating another display example of the screen illustrated in Fig. 3.

### Description of Embodiments

Detailed below is an embodiment of the present invention, with reference to Figs. 1 through 5. The following description incorporates various limitations preferable for carrying out the present invention, however the technical scope of the present invention is not limited to the following embodiment and drawings described below.

### Outline of television receiver 10

First described is the principal configuration of a television receiver (display device) 10 according to the present embodiment, with reference to Fig. 1. Fig. 1 is a block diagram schematically illustrating the configuration of the television receiver 10.

As illustrated in Fig. 1, the television receiver 10 includes a CPU 6, a memory (storage means) 7, a bus 8, an analog tuner section 12, an AV switch section 13, a digital tuner section 14, a digital demodulation section 15, a separation section (DMUX) 16, a video decoding/ capturing section 17, a video selector section 18, a video processing section (contents display means) 19, an adding circuit 20, a display control section (adjustment item display means, description information display means) 21, a liquid crystal display section 22, an IP broadcast tuner section 23, an EPG/OSD/presetting processing section 24, an audio decoding section 25, an audio selector section 26, an audio output conversion section 27, a speaker 28, an external input section 31, a recording/reproduction section 32, a tuning section 33, a communication control section 34, a remote control receiver 35, an OPC sensor 38, a parameter value adjustment section (parameter value adjusting means) 41, a parameter value changing section (parameter value changing means) 42, and a genre identification section (genre identification means) 43.

The television receiver 10 is an apparatus which displays received contents upon correcting image quality in accordance with a genre of the contents. More specifically, the television receiver 10 first identifies the genre of the received contents and displays the contents upon correcting the contents based on image quality parameter values set in advance corresponding to the identified genre. Thereafter, when the genre of displayed contents changes to another genre different from that of the former displayed contents, an image quality parameter value used for correcting the contents is changed to that set in advance corresponding to the another genre.

At this time, the television receiver 10 changes how the image quality parameter values are changed upon genre change, more specifically, changes a timing that the image quality parameter value is changed, depending on whether or not a user has made settings to accept adjustment of the image quality parameter values.

For example, in a case in which the setting is made to accept any adjustment of the image quality parameter values by the user, when a genre of the displayed contents changes to another genre, the changes in the image quality parameter values from that corresponding to the genre prior to the change to that corresponding to the genre which has been changed is immediately carried out. On the other hand, in a case in which setting is made so that the adjustment described above is not accepted, when the genre of the displayed contents changes, the changes in the image quality parameter value from that corresponding to the genre prior to the change to that corresponding to the genre which has been changed is carried out gradually. By changing the image quality parameter values as such, it is possible to carry out image quality adjustment that fulfills the needs of the user. Details of the image quality adjustment in the television receiver 10 are described later.

### Configuration of television receiver 10

The television receiver 10 according to the present embodiment includes an analog tuner section 12 and a digital tuner section 14, and can receive analog broadcast and digital broadcast via an antenna 11 for receiving analog broadcast and an antenna 40 for receiving digital broadcast, respectively. Moreover, the external input section 31 is connectable with various external devices 30 such as a solid memory for example a HDD or an SD card, or a disc device for example a BD (blu-ray disc), DVD, or CD. The television receiver 10 also has a recording/reproduction section 32 for BD/DVD/CD built inside its main body. Furthermore, the television receiver 10 also includes the IP broadcast tuner section 23, which enables reception of IP broadcast.

The CPU (Central Processing Unit) 6 is connected to the bus 8, and controls various operations of the television receiver 10.

The memory 7 stores a plurality of different genres, each associated with corresponding values of the image quality parameters. Moreover, the memory 7 is connected to the bus 8, and also stores various control programs. Hence, the CPU 6 may control the operation of the television receiver 10 by a control program that is stored in the memory 7. Namely, the television receiver 10 is controlled by a computer system including the CPU 6, and the program for operating the television receiver 10 based on the computer system is stored in the memory 7.

Moreover, the memory 7 is usually made up of a RAM (Random Access Memory), however may partially include a ROM (Read Only Memory), and may include a rewritable flash memory or the like. The memory 7 for example stores an OS (operating system) for operating the CPU 6 or may store various control software and the like, and may also store data related to program information, such as EPG (Electronic Program Guide) data received via a broadcast wave, or OSD (on screen display) image data required for displaying OSD. Moreover, the memory 7 includes a workspace functioning as a work memory required for various control operations.

The analog tuner section 12 tunes analog television broadcast signals that are received via the antenna 11 for receiving analog broadcast, in response to a tuning instruction from the tuning section 33. The signal supplied from the analog tuner section 12 is separated into an audio signal and a video signal in the AV switch section 13. Moreover, the separated video signal is inputted into the video selector section 18, and the audio signal is inputted into the audio selector section 26.

The digital tuner section 14 tunes digital television broadcast signals received via the antenna 40 for receiving digital broadcast, in response to a tuning instruction from the tuning section 33. The signals received via the digital tuner section 14 are demodulated in the digital demodulation section 15, and is sent to the separation section (DMUX) 16.

The IP broadcast tuner section 23 tunes IP broadcast received via the communication control section 34 connected to a telecommunication line, LAN, etc., in response to a tuning instruction from the tuning section 33. Moreover, the tuned specific IP broadcast is outputted, and is sent to the separation section (DMUX) 16.

The external input section 31 is connected to various external devices 30 such as a solid memory for example a HDD or an SD card, or a disc device for example a BD, DVD, or CD, and contents are received from the external devices 30. Moreover, the recording/reproduction section 32 receives contents from the disc device such as the BD, DVD, CD, etc.

The communication control section 34 carries out control so as to establish communication via a network such as a telephone communication line, LAN, and the Internet.

The remote control receiver 35 receives an optical signal from a remote controller 36, and receives control signals from the remote controller 36. Various settings entered by the user are entered via the remote controller 36.

The separation section (DMUX) 16 separates multiplexed video data and audio data that are received from the digital demodulation section 15 or the IP broadcast tuner section 23. Moreover, the separated video data is sent to the video decoding/capturing section 17, and the separated audio data is sent to the audio decoding section 25. Furthermore, the separation section (DMUX) 16 extracts data such as EPG data that is included in the broadcast signal, and sends this to the EPG/OSD/presetting processing section 24. The broadcast signal extracted by the separation section (DMUX) 16 is stored in the memory 7 by being controlled in the write-in by the CPU 6, if necessary.

The video decoding/capturing section 17 decodes video data separated by the separation section (DMUX) 16 and captures video information contained in the video data as a still image. The video signal decoded by the video decoding/ capturing section 17 is sent to the video selector section 18.

The video decoding/capturing section 17 decodes video data separated by the separation section (DMUX) 16 and captures video information contained in the video data as a still image. The video signal decoded by the video decoding/capturing section 17 is sent to the video selector section 18.

The video selector section 18 receives the video signal from the analog tuner section 12 as described above, and further receives video signals from the external input section 31. Upon receiving a control signal from the CPU 6, the video selector section 18 selects and outputs one video signal among the received video signals, and sends the selected video signal to the video processing section 19.

The genre identification section 43 identifies the genre of the displayed contents. More specifically, genre information is extracted from the video signals sent from the video processing section 19, to identify to which of the plurality of different genres the genre of the contents belongs. Upon receiving contents via any of the separation section 16, the external input section 31, and the recording/reproduction section 32, the genre identification section 43 identifies a genre of that contents.

When the identified genre changes to another genre different from the former genre, the parameter value changing section 42 changes the image quality parameter value used for correcting the contents. Namely, when the identified genre changes to another genre, the parameter value changing section 42 changes the value of the image quality parameter from that corresponding to the genre prior to the change to that corresponding to the genre which has been changed. Details of the change in the image quality parameter values by the parameter value changing section 42 are described later.

The video processing section 19 corrects the video signals sent from the video selector section 18. More specifically, the displayed contents is corrected based on the values of the image quality parameters set in advance corresponding to the genre identified by the genre identification section 43. Moreover, when the identified genre changes to another genre, the video processing section 19 receives the changed values of the image quality parameters from the parameter value changing section 42, and corrects the contents based on this value.

The EPG/OSD/presetting processing section 24 depicts the EPG data or OSD data that are stored in the memory 7 in advance. The OSD data in the present embodiment may be any data as long as it includes adjustment items for adjusting a value of an image quality parameter. Moreover, the OSD data may also include data used for depicting, for example, various information stored in the memory 7, such as a setting menu screen, a volume cage, a current time, a tuned channel etc. Moreover, the EPG/OSD/presetting processing section 24 may create an electronic program guide based on the EPG data regularly updated and stored, and may create information for accepting a presetting process by the user.

The display control section 21 outputs the contents corrected by the video processing section 19 to the liquid crystal display section 22. Moreover, the display control section 21 sends, to the liquid crystal display section 22, the EPG data or OSD data received from the EPG/ OSD/ presetting processing section 24 in addition to the video data sent from the video processing section 19, in such a manner that the EPG data or OSD data is superposed on the video data, which EPG data or OSD data is added by the adding circuit 20.

The parameter value adjustment section 41 adjusts the value of the image quality parameter based on an entry by the user accepted via the remote control receiver 35. Namely, when an entry by the user is accepted for adjusting the value of the image quality parameter that corresponds to the adjustment item while the adjustment item is displayed, adjustment is carried out based on this entry. Examples of this adjustment include video processing to a received video signal such as noise reduction, sharpness adjustment, and contrast adjustment.

The liquid crystal display section 22 displays on the screen the video data and the EPG data or OSD data sent from the display control section 21. In the present embodiment, a liquid crystal display is used as a display section, however the display section is not limited to this. For example, other displays may be used, such as a plasma display or an EL (electroluminescence) display.

The audio decoding section 25 decodes audio data separated from the separation section (DMUX) 16. The audio decoding section 25 sends the decoded audio signal to the audio selector section 26.

The audio selector section 26 receives audio signals from the AV switch section 13, audio signals from the external input section 31, and audio signals from the audio decoding section 25, selects an audio signal corresponding to the video signal selected in the video selector section 18 based on a control by the CPU 6, and sends the audio signal to the speaker 28 via the audio output conversion section 27.

The audio output conversion section 27 converts the received audio signal to a signal optimum for reproduction by the speaker 28, and supplies this to the speaker 28.

The OPC sensor 38 detects a surrounding brightness. It is preferable that the OPC sensor 38 is an illuminance sensor including a low-pass filter for example. This reduces a temporary change such as a change caused by a person passing in front of the sensor, thereby allowing for smoothly obtaining an illuminance.

### Change in image quality parameter according to genre

As described above, when the television receiver 10 according to the present embodiment receives contents, the television receiver 10 displays the contents upon correcting the image quality of the contents in accordance with the genre of the contents. The "genre" in the description represents features of the contents that are associated with the contents, and encompasses a plurality of genres, for example: "news/coverage", "information/TV gossip show", "variety show", "movie", and "sports program".

Moreover, in the television receiver 10, each of the plurality of different genres are set in advance with values of image quality parameters to be used in correcting the contents. Hence, after the genre identification section 43 identifies to which of the plurality of different genres the genre of the contents received by the genre identification section 43 belongs, the contents is corrected in accordance with the identified genre.

Thereafter, when the genre of the displayed contents changes to another genre different from the former contents, the image quality parameter value to be used in correcting the contents changes from a value set in advance corresponding to the genre prior to the change to a value set in advance corresponding to the genre following the change. Namely, when the genre identification section 43 detects that the genre of the displayed contents has changed, the genre identification section 43 changes the image quality parameter value to that corresponding to the genre following that change.

At this time, when no setting is made to accept the adjustment of the image quality parameter values by the user, i.e. when the adjustment items are not displayed, the values of the image quality parameter is changed gradually from the values set in advance corresponding to the genre before the genre changes to the values set in advance corresponding the genre after the genre has changed. As a result, even if the value of the image quality parameter changes to that corresponding to the changed genre every time the type of genre changes, the image quality of the contents displayed after the image quality is corrected based on the changed value does not change abruptly. This allows for preventing the sense of discomfort in view by the user.

On the other hand, when the setting is made so that adjustment of the image quality parameter value by the user is accepted, i.e., when the adjustment items are displayed, the image quality parameter value is immediately changed from the value set in advance corresponding to the genre before the genre changes to the value set in advance corresponding to the genre after the genre has changed. This allows for the user to adjust the image quality parameter to an image quality that meets the preference of the user immediately, when the genre of the displayed contents changes to a specific genre selected by the user.

For instance, a user is viewing contents of the genre of "sports program", and the adjustment items for adjusting the image quality parameters are not displayed since there is no particular intention to adjust the values of the image quality parameters. In this case, when the "sports program" viewed ends and contents of the genre "movie" starts, the image quality parameters of the contents is changed gradually from the values set corresponding to the "sports program" to the values set in advance corresponding to the "movie", as illustrated in (a) of Fig. 2 (period "t" in (a) of Fig. 2). Fig. 2 is a graph showing a change in the image quality parameter value with the television receiver 10 of the present embodiment. Thereafter, the video processing section 19 corrects the contents according to the image quality parameter value that is gradually changed, so therefore the image quality of the contents do not change abruptly between before and after the genre has changed. This allows for avoiding the discomfort felt in the view by the user.

The image quality parameter value can be gradually changed by a conventionally known method of changing the image quality parameter value, and is sufficiently changed in such a manner that, for example, the image quality parameter value set in advance corresponding to the genre before the genre changes is connected to the image quality parameter value set in advance corresponding to the genre after the genre has changed with a straight line as illustrated in the graph of (a) of Fig. 2, and the value is changed gradually by taking any plurality of values on the straight line including a median value of the image quality parameter values.

On the other hand, when the "sports program" that the user is viewing ends and the broadcasting of the "movie" starts, the adjustment items for adjusting the values of the image quality parameters to have the image quality of the "movie" meet the preference of the user is displayed. In such a case, when the genre of the viewed contents change from "sports program" to "movie", the image quality parameter of the contents is immediately changed from the values set corresponding to the "sports program" to the values set in advance corresponding to the "movie", as illustrated in (b) of Fig. 2. Here, the video processing section 19 corrects the contents based on the values of the image quality parameters immediately changed, which allows for the user to immediately adjust the image quality parameters so as to achieve the image quality of their preference. As such, it is possible with the television receiver 10 to smoothly adjust the image quality so that the preference of the user is achieved.

Changing of the image quality parameter values depending on the display and non-display of the adjustment items is not limited to when a certain genre ends and another genre different from that certain genre starts; the image quality parameter values are also similarly changed in response to the display and non-display of the adjustment items when a channel switching instruction from the user is received via the remote controller 36.

Moreover, it is preferable that the parameter value adjustment section 41 accepts adjustment of the value of the image quality parameter when the genre of the displayed contents match with the genre that the image quality parameter value is adjusted based on the adjustment item.

Namely, when the genre of the displayed contents does not match the genre corresponding to the adjustment item, i.e. any genre selected by the user, the adjustment of the values of the image quality parameters by the user is not accepted. Hence, when the user wishes to adjust the values of the image quality parameters, the user is to wait until the genre of the displayed contents matches the selected genre, or the user is to change the displayed contents to the genre that matches the genre selected in the adjustment items. As such, by not accepting the adjustment by the user when the genre to be adjusted in its image quality parameter value is not displayed, it is possible to prevent misadjustment in the image quality parameter values.

Moreover, for example, in a case of employing a system detecting that the genre of the viewed contents is a "movie" based on 3-2 pull down or the like, it is preferable that the adjustment of the values of the image quality parameters is accepted when the genre of the displayed contents matches the genre that the values of the image quality parameters are adjusted based on the adjustment item.

That is to say, the 3-2 pull down is performed when the genre of the viewed contents is the "movie", however when the contents run a commercial, the 3-2 pull down is not performed; this causes the genre to be distinguished as changed to a genre other than the "movie". In this case, the change in genre causes the value of the image quality parameter to change similarly as described above. Hence, for example when a commercial is run while the user is viewing the "movie" and the user is directly adjusting the image quality parameter values, the parameter values of the image quality of the displayed contents, which image quality serves as a standard for the adjustment, change to those of an image quality different from the image quality of the "movie". On this account, even if the specification is one in which the image quality parameter value changes every time a commercial is run, by having a configuration that does not accept adjustment of the image quality parameter value by the user when the genre of the commercial does not match the genre selected in the adjustment item, it is possible to prevent the misadjustment of the image quality parameter value.

Moreover, it is preferable that in the television receiver 10, when the genre of the displayed contents and the genre corresponding to the adjustment items are different from each other, the display control section 21 causes display of description information describing that those genres differ from each other.

For instance, in the example illustrated in Fig. 3, the genre corresponding to the contents displayed on the screen 201 is "sports program", whereas the genre corresponding to the adjustment items is "movie". At this time, the screen 201 displays, superposed on the displayed contents, a warning that the genre of the contents on a region 204 on the screen differs from the genre that is to be adjusted. Fig. 3 is a view illustrating an example of a screen of the television receiver 10 according to the present embodiment. In the example illustrated in Fig. 3, a region 202 displays the genre of the displayed contents, and a region 206 displays the adjustment items corresponding to the selected genre.

Thereafter, as illustrated in Fig. 4, when the genre corresponding to the displayed contents changes from the "sports program" to the "movie", the genre of the displayed contents matches the genre of the adjustment items. As a result, adjustment by the user is accepted. Fig. 4 is a view illustrating an example of a screen of the television receiver 10 according to the present embodiment.

Accordingly, even in a case in which the type of genre currently displayed cannot be distinguished by first sight, by displaying the description information, it is possible to have the user acknowledge that the image quality parameter cannot be adjusted accurately if the genre is not changed. This as a result allows for preventing misadjustment.

In the example illustrated in Fig. 3, the warning is displayed superposing the display on the screen 201. However, the warning can be displayed not superposing the screen 201. Namely, the television receiver 10 may further include scaling means for enlarging and reducing based on a set aspect ratio the image of the contents displayed on the screen 201. In this case, it is preferable that the display control section 21 displays the warning on a blank space on the display, which blank space is generated by reducing the image with the scaling means.

Fig. 5 is a view illustrating another display example of a screen illustrated in Fig. 3. More specifically, Fig. 5 illustrates a state in which the image showing the contents, i.e. the screen 201, is reduced based on a set aspect ratio (16:9 in the present embodiment), whereby providing a blank space on the display 103. By scaling the screen 201 as such and displaying the warning in the provided blank space, it is possible to display the warning without tainting the screen 201.

### Operation of television receiver 10

The following description explains an example of an operation of the television receiver 10 according to the present embodiment. The description here explains a case in which adjustment items are displayed when the genre of the contents changes.

First, after the power is turned on, one of the analog tuner section 12, the digital tuner section 14, the external input section 31, and the recording/ reproduction section 32 receives contents. Next, the genre identification section 43 identifies to which of the plurality of different genres the genre of the received contents belong. If as a result the genre is identified as "sports program" for example, the video processing section 19 adjusts the contents with use of the image quality parameter value stored in the memory 7, which image quality parameter value is stored in advance associated with the genre "sports program". This corrected contents is displayed in the liquid crystal display section 22.

Subsequently, after an instruction by the user of image quality adjustment is received via the remote controller 36, the display control section 21 displays the adjustment items superposing on the contents. The user selects, in the adjustment items displayed as such, the genre that the user wishes to adjust its image quality. In the example illustrated in Fig. 3, the genre selected by the user is "movie", and the adjustment items corresponding to the "movie" is displayed superposed on the video of the "sports program" displayed on the screen 201.

As the adjustment items that can be set by the user, adjustment bars are displayed for adjusting color saturation, sharpness, and gamma, however the parameters for adjusting the image quality is not limited to these parameters. For example, the television receiver 10 may be configured to allow for adjustment of various parameters such as brightness, black level, and the like. Moreover, a displayed form of the adjustment items to be displayed on the region 206 also is not limited to this example.

In a case in which the user sends an instruction to adjust the parameters via the remote controller 36 in this state, the genre of the displayed contents differs from the genre corresponding to the adjustment items; this makes it impossible to adjust the image quality parameters accurately. Accordingly, a description may be displayed, which explains that the genre of the displayed contents differs from the genre corresponding to the selected adjustment items. In Fig. 3, a description is displayed on the region 204 superposed on the contents. This allows for interrupting an operation by the user of adjusting the image quality parameter by mistake while the contents of a different genre is displayed.

In a case in which the genre of the displayed contents differ from the genre corresponding to the adjustment items, a description warning the user that the genres differ from each other may be displayed as described above, or alternatively, for example settings may be made so that no instruction to adjust the parameters by the user is accepted, or these may be employed in combination.

Subsequently, when the genre of the displayed contents changes from the "sports program" to the "movie", the parameter value changing section 42 immediately changes the image quality parameter values used for correcting the contents from the values set corresponding to the "sports program" to values set corresponding to the "movie". Accordingly, even if the user instructs via the remote controller 36 to adjust the parameter simultaneously with confirming that the genre of the displayed contents has changed to the "movie", it is possible to accurately adjust the image quality of the contents since the image quality of the displayed contents serving as the standard has already changed.

The present embodiment describes an example which accepts the image quality parameter adjustment by the user for the genre that has been changed, every time the genre of the displayed contents is switched over. However, the settings may be made so that image quality parameter values of the genre that are once adjusted by the user is stored in the memory 7, and the image is displayed in the image quality parameters which meet the preference of the user automatically, next time on. In this case, the configuration may be one in which when the adjustment items are not displayed when the genre of the displayed contents changes, the image quality parameter value gradually changes.

The foregoing description is provided with use of a television receiver as an example in particular, however it is clear that the display method according to the present invention is applicable with portable devices capable of viewing television, such as a portable phone, a car navigation system, a portable game terminal, and the like.

### Program and recording medium

Finally, the sections included in the television receiver 10 may be realized by way of hardware or software as executed by a CPU (Central Processing Unit) as follows.

The television receiver 10 includes a CPU and memory devices (recording media). The CPU executes instructions in control programs realizing the functions. The memory devices include a ROM (Read Only Memory) which contains programs, a RAM (Random Access Memory) to which the programs are loaded, and a memory containing the programs and various data. With this configuration, the objective of the present invention can also be achieved by a predetermined recording medium.

This recording medium records a program code (executable program, intermediate code program, or source program) for the television receiver 10, which is software realizing the aforementioned functions, so as to be computer-readable. This recording medium is supplied to the television receiver 10. The television receiver 10 (or CPU, MPU) serving as the computer may retrieve and execute the program code recorded in the supplied recording medium.

The recording medium, which supplies the program code to the television receiver 10, is not limited to a specific configuration or type. Namely, this recording medium may be, for example, a tape, such as a magnetic tape or a cassette tape; a magnetic disk, such as a floppy (Registered Trademark) disk or a hard disk, or an optical disk, such as CD-ROM/MO/MD/DVD/CD-R; a card, such as an IC card (memory card) or an optical card; or a semiconductor memory, such as a mask ROM/EPROM/EEPROM/flash ROM.

Moreover, the object of the present invention is attainable by configuring the television receiver 10 so as to be connectable to a communication network. In this case, the program code can be delivered to the television receiver 10 over the communications network. The communications network is not limited in any particular manner as long as the program code is delivered to the television receiver 10, and may be, for example, the Internet, an intranet, extranet, LAN, ISDN, VAN, CATV communications network, virtual dedicated network (virtual private network), telephone line network, mobile communications network, or satellite communications network.

The transfer medium which makes up the communications network is also not limited to a specific configuration or type as long as it is any medium capable of transferring the program code, and may be, for example, wired line, such as IEEE 1394, USB (Universal Serial Bus), electric power line, cable TV line, telephone line, or ADSL (Asymmetric Digital Subscriber Line) line; or wireless, such as infrared radiation (IrDA, remote control), Bluetooth (Registered Trademark), 802.11 wireless, HDR, mobile telephone network, satellite line, or terrestrial digital network. The present invention encompasses a carrier wave or data signal transmission in which the program code is embodied electronically.

Moreover, in the display device according to the present invention, it is preferable that the parameter value changing means changes the value of the image quality parameter gradually while no adjustment item is displayed, and changes the image quality parameter immediately while the adjustment item is displayed.

Moreover, in the display device according to the present invention, it is preferable that the parameter value adjusting means accepts adjustment of the value of the image quality parameter when a genre of the contents displayed matches a genre corresponding to the adjustment item.

According to the configuration, by not accepting adjustment by a user when the genre whose image quality parameter is to be adjusted, that is, the genre corresponding to the adjustment item is not displayed, it is possible to prevent the misadjustment of the image quality parameter values.

Moreover, it is preferable that the display device according the present invention further includes description information display means for displaying, when a genre of the contents displayed differs from a genre corresponding to the adjustment item, description information describing that the genre of the contents displayed differ from the genre corresponding to the adjustment item.

According to the foregoing configuration, even if the type of genre that is displayed is indistinguishable at first sight, it is possible to have the user acknowledge that the image quality parameter cannot be accurately adjusted if the genre has not changed, by displaying the description information. This as a result allows for preventing misadjustment.

Moreover, it is preferable that the display device according to the present invention further includes scaling means for enlarging and reducing, with respect to a set aspect ratio, an image indicative of the contents, the description information display means displaying the description information in a blank space on the screen generated by reducing the image with the scaling means.

Moreover, it is preferable that the display device according to the present invention further includes storage means for storing the plurality of genres each associated with a corresponding value of the image quality parameter.

According to the configuration, the value of the image quality parameter to be changed does not need to be set every time the genre displayed changes. This quickens the processing speed.

Moreover, in the display device according to the present invention, it is preferable that the contents display means displays the contents on a liquid crystal display, a plasma display, or an EL (electroluminescence) display. This allows for being compatible to various types of display devices.

Note that the display device according to the present invention may be accomplished by a computer. In this case, a program that causes the computer to operate as the foregoing means to accomplish the display device with the computer, and a computer-readable recording medium having that program stored thereon, are also within the scope of the present invention.

The present invention is not limited to the description of the embodiments above, but may be altered by a skilled person within the scope of the claims. An embodiment based on a proper combination of technical means disclosed in different embodiments is encompassed in the technical scope of the present invention.

### Industrial Applicability

The present invention is suitably applicable as a display device of a television receiver and the like.

### Reference Signs List

10 television receiver (display device)
19 video processing section (contents display means)
21 display control section (adjustment item display means, description information display means)
22 liquid crystal display section
41 parameter value adjustment section (parameter value adjusting means)
42 parameter value changing section (parameter value changing means)
43 genre identification section (genre identification means)

## Claims

1. e identification section (genre identification A display device that receives and displays contents, the device comprising:
genre identification means for identifying to which of a plurality of different genres a genre of the contents belong;
contents display means for displaying the contents upon correcting the contents with an image quality parameter set corresponding to the identified genre in advance, the image quality parameter being indicative of an image quality in accordance with the genre;
adjustment item display means for displaying, while the contents is displayed, an adjustment item for adjusting a value of the image quality parameter indicative of the image quality corresponding to a genre of any one of the plurality of genres;
parameter value adjusting means for adjusting the value of the image quality parameter corresponding to the adjustment item, based on entry by a user with respect to the displayed adjustment item; and
parameter value changing means for changing the value of the image quality parameter used by the contents display means in correcting the contents, when the genre identified by the identifying means changes from a genre of any one of the plurality of genres to another genre different from that genre, the value of the image quality parameter being changed from a value set corresponding to the genre before the genre changes to a value set in advance corresponding to the genre after the genre changes,
the parameter value changing means changing the value of the image quality parameter in a different period of time depending on whether or not the adjustment item is displayed.

2. ng on whether or not the adjustment item is displayed. The display device according to claim 1, wherein the parameter value changing means changes the value of the image quality parameter gradually while no adjustment item is displayed, and changes the image quality parameter immediately while the adjustment item is displayed.

3. tely while the adjustment item is displayed. The display device according to claim 1 or 2, wherein the parameter value adjusting means accepts adjustment of the value of the image quality parameter when a genre of the contents displayed matches a genre corresponding to the adjustment item.

4. ent item. The display device according to any one of claims 1 to 3, further comprising description information display means for displaying, when a genre of the contents displayed differs from a genre corresponding to the adjustment item, description information describing that the genre of the contents displayed differ from the genre corresponding to the adjustment item.

5. ent item. The display device according to claim 4, further comprising scaling means for enlarging and reducing, with respect to a set aspect ratio, an image indicative of the contents,
the description information display means displaying the description information in a blank space on the screen generated by reducing the image with the scaling means.

6. ed by reducing the image with the scaling means. The display device according to any one of claims 1 to 5, further comprising storage means for storing the plurality of genres each associated with a corresponding value of the image quality parameter.

7. uality parameter. The display device according to any one of claims 1 to 6, wherein the contents display means displays the contents on a liquid crystal display, a plasma display, or an EL (electroluminescence) display.

8. oluminescence) display. A method of controlling a device that receives and displays contents, the method comprising the steps of:
identifying to which of a plurality of different genres a genre of the contents belong;
displaying the contents upon correcting the contents with an image quality parameter set in advance corresponding to the genre identified in the step of identifying, the image quality parameter being indicative of an image quality in accordance with the genre;
displaying an adjustment item, while the contents is displayed in the step of displaying the contents, the adjustment item being displayed for adjusting a value of the image quality parameter indicative of the image quality corresponding to a genre of any one of the plurality of genres;
adjusting a value of the image quality parameter corresponding to the adjustment item, based on entry by a user with respect to the adjustment item displayed in the step of displaying the adjustment item; and
changing the value of the image quality parameter used by the contents display means in correcting the contents in the step of displaying, when the genre identified in the step of identifying changes from a genre of any one of the plurality of genres to another genre different from that genre, the value of the image quality parameter being changed from a value set corresponding to the genre before the genre changes to a value set in advance corresponding to the genre after the genre changes,
the step of changing the image quality parameter value changing the value of the image quality parameter in a different period of time depending on whether or not the adjustment item is displayed.

9. ent item is displayed. A program that causes a computer to operate as means of a display device as set forth in any one of claims 1 to 7.

10. play device as set forth in any one of claims 1 to 7. A computer-readable recording medium on which a program as set forth in claim 9 is stored.
